# EUROPEAN PATENT SPECIFICATION

(11) **EP 3 649 875 B1**
(45) Date of publication and mention of the grant of the patent: **11.12.2024**
(21) Application number: 18827796.6
(22) Date of filing: 29.06.2018
(51) Int. Cl.: A23L 27/00, A23D 7/005, A23D 7/01, A23D 7/04, A23L 27/10

(54) **EMULSIFIED LIQUID SEASONING CONTAINING INGREDIENT MATERIAL**
EMULGIERTES FLÜSSIGES WÜRZMITTEL MIT BESTANDTEILEN
ASSAISONNEMENT LIQUIDE ÉMULSIFIÉ CONTENANT UN MATÉRIAU D'INGRÉDIENT

(30) Priority: 04.07.2017 JP 2017131267
(43) Date of publication of application: 13.05.2020
(73) Proprietor: Mizkan Holdings Co., Ltd., Handa-shi, Aichi 475-8585 (JP); Mizkan Co., Ltd., Handa-shi, Aichi 475-8585 (JP)
(72) Inventor: MIZUNO Tatsuya, Handa-shi Aichi 475-8585 (JP); YOSHIMOTO Konomi, Handa-shi Aichi 475-8585 (JP)
(74) Representative: Mewburn Ellis LLP
(86) International application number: PCT/JP2018/024951
(87) International publication number: WO 2019/009217

(56) References cited:
- EP-A1- 1 174 042
- EP-A1- 1 197 153
- WO-A1-02/34071
- JP-A- 2012 019 780
- JP-A- 2013 000 095
- JP-A- 2013 031 403
- JP-A- 2016 005 442
- JP-A- 2016 013 105
- JP-A- 2016 123 329
- JP-A- 2017 046 672
- JP-A- 2017 112 926
- JP-A- H11 239 462
- KR-A- 20090 085 438
- KR-A- 20120 079 945
- KR-B1- 101 297 488
- ANONYMOUS: "Top Valu Ingredients Kimchi Pot Bag 330g", 1 December 2014 (2014-12-01), pages 1 - 4, XP055661853, Retrieved from the Internet <URL:https://mognavi.jp/food/941015>

## Description

### Technical Field

The present invention relates to an ingredient-containing emulsified liquid seasoning in which fermentation feeling and *umami* taste of an ingredient are enhanced.

### Background Art

Conventionally, seasonings having various tastes or forms have been used in salads or prepared foods. Among others, in the case of a liquid seasoning containing an ingredient such as grated vegetables or finely chopped vegetables in its seasoning liquid, since an ingredient has previously been added into a seasoning liquid, time and effort for preparing an ingredient separately, mixing it with a seasoning liquid, and cooking the resultant mixture, for example, by heating the mixture, can be saved. In addition, diversifying preferences of consumers are satisfied by varying ingredients.

Such an ingredient-containing liquid seasoning uses a fermented seasoning such as soy sauce and *miso* (soybean paste) along with its ingredient and has been designed to enhance the flavor and *umami* taste of the whole liquid seasoning by suppressing deterioration of the flavor of an ingredient caused by heat-mixing the ingredient and the fermented seasoning. For example, Patent Literature 1 describes a method for improving the flavor of vegetable granules and/or fruit juice through a production process of a seasoning containing vegetable granules and/or fruit juice, the production process including heating a mixture of raw soy sauce and a part of raw materials (dried vegetables or sugar) except 5'-nucleotide, subsequently mixing 5'-nucleotide and the rest of the raw materials, and heating the resultant mixture again in order to suppress decomposition and elimination of 5'-nucleotide, which is an *umami* component, caused by a phosphatase contained in raw soy sauce. However, this method cannot impart fermentation feeling and *umami* taste to an ingredient in its seasoning liquid.

KR 2012 0079945 A concerns a producing method of dressing sauce containing red pepper seeds and red pepper seed oil. KR 101297488 B1 concerns a production method of seasoned *Cucumis melo,* var. *conomon* Makino. KR 2009 0085438 A concerns a method for reprocessing preserved Kimchi. WO 02/34071 A1 concerns an edible oil-in-water emulsion comprising: 35-70 % (wt) edible oil; 0.5-10 % (wt) egg yolk derived emulsifier; 0.3-1.5 % (wt) casein; 65-25 % (wt) water, wherein at least 60 % of the oil droplets has a size of 1-5 µm. EP 1197153 A1 concerns aqueous dispersions of plant sterols and other high melting lipids. EP 1174042 A1 concerns a plant seed product comprising at least 5 % plant seeds, water, at least one ingredient selected from the group consisting of sugar, salt, starch, thickener, oil, fat, emulsifier, acid and a combination thereof.

### Citation List

### Patent Literature

Patent Literature 1: JP Patent Publication (Kokai) No. 2013-99306 A

### Summary of Invention

### Technical Problem

An object of the present invention is to impart enhanced fermentation feeling and *umami* taste to an ingredient in a seasoning of an ingredient-containing liquid seasoning.

### Solution to Problem

In view of the above, the present inventors conducted intensive studies to achieve the above-described object. As a result, the present inventors have found that a flavor oil or an edible fat/oil to which a flavor component has transferred in a seasoning liquid is in an emulsified state in an ingredient-containing liquid seasoning, and that lactic acid present in a seasoning liquid allows an ingredient to easily absorb the fat/oil component to provide an ingredient with enhanced fermentation feeling and *umami* taste, and the present invention has been completed thereby. The "fermentation feeling" herein refers to palate feeling that provides fresh sour feeling in addition to peculiar ripening feeling like kimchi with good balance, for example.

Specifically, the present invention encompasses the following inventions.
[1] An ingredient-containing emulsified liquid seasoning, comprising: (A) a dried ingredient selected from a dried vegetable, or a dried product of a fruit, seed, nut, mushroom, bean, seafood, meat, processed meat product, seaweed or egg; (B) at least one fat/oil selected from a flavor oil and an edible fat/oil other than flavor oils; (C) lactic acid; (D) a spice or spice extract; and (E) a fermented product, wherein the content of lactic acid in the ingredient-containing emulsified liquid seasoning is 0.2% to 2.0% by mass, and the content of the fat/oil in the ingredient-containing emulsified liquid seasoning is 0.2% to 10% by mass.
[2] The ingredient-containing emulsified liquid seasoning according to [1], further comprising an emulsifier.
[3] The ingredient-containing emulsified liquid seasoning according to [1] or [2], wherein the spice is at least one selected from capsicum, ginger, garlic, mustard, and paprika.
[4] The ingredient-containing emulsified liquid seasoning according to any of [1] to [3], wherein the fermented product is a fermented plant product or a fermented milk product.
[5] The ingredient-containing emulsified liquid seasoning according to any of [2] to [4], wherein the emulsifier is at least one selected from yolk, yolk lecithin, soybean lecithin, and a starch hydrolysate.
[6] The ingredient-containing emulsified liquid seasoning according to any of [1] to [5], wherein the ingredient-containing emulsified liquid seasoning is used for cooking with heat.
[7] A method for producing the ingredient-containing emulsified liquid seasoning according to any of [1] to [6], the method comprising following step (a-1) or (a-2) and step (b):
   (a-1) a step of adding either a flavor oil or a fat/oil mixture of a flavor oil and an edible fat/oil other than flavor oils to water, followed by emulsification through mixing and stirring to obtain a fat/oil emulsion; or
   (a-2) a step of adding an edible fat/oil other than flavor oils and a spice or spice extract to water, followed by emulsification through mixing and stirring to obtain a fat/oil emulsion; and
   (b) a step of mixing the fat/oil emulsion obtained in either the step (a-1) or the step (a-2), a seasoning liquid comprising at least lactic acid and a fermented product, and an ingredient, followed by heat treatment at 60°C to 100°C for 5 to 30 minutes.
[8] The method according to [7], wherein the mixing and stirring are conducted in the presence of an emulsifier.
[9] A method for cooking a food product for cooking with heat, comprising using the ingredient-containing emulsified liquid seasoning according to any of [1] to [6].

### Advantageous Effects of Invention

According to the present invention, an ingredient-containing emulsified liquid seasoning containing an ingredient with enhanced fermentation feeling and *umami* taste is provided. In the ingredient-containing emulsified liquid seasoning of the present invention, rich taste and the flavor of a spice are felt throughout the seasoning along with the fermentation feeling and *umami* taste of an ingredient. In addition, an ingredient-containing emulsified liquid seasoning of the present invention keeps such taste and flavor described above even after being heated, and it is also suitable for use in cooking with heat.

### Description of Embodiments

### 1. Ingredient-containing emulsified liquid seasoning

An ingredient-containing emulsified liquid seasoning of the present invention (hereinafter referred to as "the emulsified liquid seasoning of the present invention") comprises (A) an ingredient; (B) at least one fat/oil selected from a flavor oil and an edible fat/oil other than flavor oils; (C) lactic acid; (D) a spice or spice extract; and (E) a fermented product.

### (Ingredient)

In the emulsified liquid seasoning of the present invention, a dried ingredient is used as the ingredient from the viewpoint that the ingredient easily absorbs a seasoning liquid in which a fat/oil to which a flavor component originating from a spice or a potherb has transferred is dispersed in an emulsified state. Incidentally, a dried ingredient may be used in combination with another ingredient.

The ingredient may have any shape such as a rectangular solid, cube (dice), spherical, or granular shape. In addition, with respect to the size of the ingredient, in the case where the ingredient has a rectangular solid shape, for example, the longest side length of the ingredient after swelling in a seasoning liquid is preferably 1 to 60 mm, more preferably 2 to 50 mm, still more preferably 3 to 40 mm, and most preferably 5 to 40 mm. When the size of the ingredient after swelling is less than 1 mm, the original food texture of the ingredient is insufficient, and the fermentation feeling and *umami* taste of the ingredient are not sufficiently felt, resulting in poor flavor of the entire seasoning. In addition, when the size of the ingredient after swelling exceeds 60 mm, it is difficult for a seasoning liquid to penetrate into the ingredient, and therefore the fermentation feeling and *umami* taste of the ingredient are not satisfactory, and the cooking workability also worsens.

The content of the ingredient in the emulsified liquid seasoning of the present invention is 10% to 80% by mass, preferably 20% to 80% by mass, more preferably 40% to 70% by mass, and still more preferably 40% to 60% by mass based on the total mass of the seasoning in terms of wet weight. When the content of the ingredient is less than 20% by mass in terms of wet weight, the fermentation feeling and *umami* taste of the ingredient are not sufficiently obtained. Accordingly, the flavor of the entire emulsified liquid seasoning is weakened and not satisfactory. In addition, when the content of the ingredient exceeds 80% by mass in terms of wet weight, while the fermentation feeling and *umami* taste of the ingredient and the flavor of the emulsified liquid seasoning become good, the workability in using the emulsified liquid seasoning for cooking is worsened since the amount of the seasoning liquid is too little.

The water content of the dried ingredient is preferably 8% by mass or less, more preferably 6% by mass or less, and still more preferably 5% by mass or less from the viewpoint of preventing excess water from transferring to the seasoning liquid.

The above-described dried ingredient may also be prepared by mixing an ingredient before drying with sugar, or by immersing an ingredient before drying in a sugar-containing solution, followed by heat-mixing. Specifically, examples of the sugar include glucose, fructose, sucrose, lactose, and a starch hydrolysate. Two or more types of the sugar may also be used. The amount of sugar to be added, mixing time, the concentration of sugar in the case of immersing an ingredient in a sugar-containing solution, the temperature and time for the heat-mixing operation, and the temperature and time for the subsequent drying operation may be arbitrarily selected depending on the type and size of the ingredient, etc. However, the amount of the sugar to be added in the case of mixing an ingredient with the sugar is preferably 5% to 30% by mass based on the mass of the dried ingredient, the concentration of the sugar in the case of immersing an ingredient in a sugar-containing solution is preferably 5% to 30% by mass, and the conditions for the heat-mixing in the solution are preferably a temperature of 50°C to 80°C and a period of time of 10 minutes to 12 hours.

Moreover, the above-described dried ingredient may also be produced by heat-mixing a cut ingredient in a calcium salt solution and then drying it. The concentration of the calcium salt solution, the temperature and time for the heat-mixing operation, and the temperature and time for the subsequent drying operation may be arbitrarily selected depending on the type and size of the ingredient, etc. Specifically, the dried ingredient may be produced by stirring a cut ingredient in an aqueous solution prepared by dissolving a calcium salt such as calcium chloride, calcium lactate, or calcium acetate in water to have a concentration of 0.5% to 5% by mass, at 50°C to 80°C for 1 to 120 minutes, then separating the ingredient from the treatment solution to remove liquid, and then drying the resultant ingredient at 65°C to 80°C for 3 to 12 hours. The above-described calcium aqueous solution may also contain sugar such as glucose, fructose, sucrose, lactose, or a starch hydrolysate in an amount of 5% to 30% by mass.

The above-described dried ingredient can be produced by cutting an ingredient to a predetermined size and then drying the ingredient, or by drying an ingredient and then cutting the ingredient. Examples of the drying method include hot air drying, freeze drying, vacuum heat drying, microwave drying, sun drying, and natural drying.

In the case where the ingredient is a vegetable, although the type of the vegetable is not particularly limited, the vegetable is preferably one that is eaten after cooking with heat, and examples thereof include onions, cabbages, Chinese cabbages, carrots, green bell peppers, radishes, radish leaves, beets, lotus roots, burdocks, green onions, Japanese basil leaves, celeries, parsleys, bell peppers, tomatoes, cucumbers, corns (sweet corns), cauliflowers, eggplants, potatoes, sweet potatoes, taros, yams, and pumpkins. Among them, onions, cabbages, Chinese cabbages, carrots, green onions, celeries, and bell peppers are preferable, and onions, cabbages, Chinese cabbages, and carrots are more preferable. These vegetables can be used alone or in combination of two or more types.

Examples of the ingredient other than vegetables include dried products of fruits (lemon, *yuzu, sudachi,* lime, orange, grape fruit, apple, pineapple, peach, grape, strawberry, pear, banana, melon, kiwi, cassis, acerola, blueberry, apricot, guava, plum, mango, papaya, lychee, etc.), seeds and nuts (almond, peanut, pine nut, coconut, etc.), mushrooms (*shimeji* mushroom, *shiitake* mushroom, western mushroom, king oyster mushroom, *maitake* mushroom, etc.), beans (soybean, pea, lentil, chickpea, Egyptian bean, etc.), seafood (bonito, tuna, sardine, squid, shrimp, clam, scallop, mussel, etc.), meat or processed meat products (beef, chicken, pork, ham, bacon, sausage, etc.), and seaweeds (*Hijiki* seaweed, brown seaweed, kelp, etc.), and eggs. These ingredients can be used alone or in combination of two or more types.

### (Flavor oil and edible fat/oil other than flavor oils)

The "flavor oil" used for the emulsified liquid seasoning of the present invention refers to a fat/oil in which a flavor component such as a spice, a potherb, or a meat or seafood extract has transferred to and has been added to an edible fat/oil, preferably an edible vegetable fat/oil. The flavor oil can be produced by a usual method, and examples thereof typically include a method in which a flavor raw material such as a spice, a potherb, or a meat or seafood extract and an edible fat/oil are heated at about 100°C, and the resultant oil component is subsequently collected.

Examples of the above-described flavor oil include capsicum oil, ginger oil, garlic oil, mustard oil, onion oil, green onion oil, leek oil, water dropwort Japanese parsley oil, Japanese basil oil, Japanese horseradish oil, lemon oil, seafood oil, and meat oil. These flavor oils may be used alone as a single type, or may also be used in any given combination of two or more types at any given ratio. Among the above-described examples, capsicum oil, ginger oil, garlic oil, mustard oil, onion oil, green onion oil, leek oil, seafood oil, and meat oil are preferable from the viewpoint of imparting high fermentation feeling to the ingredient.

Examples of the "edible fat/oil other than flavor oils" used in the emulsified liquid seasoning of the present invention include vegetable fat/oil such as sesame oil, canola oil, sunflower oil, soybean oil, corn oil, olive oil, palm oil, safflower oil, cottonseed oil, and animal fat/oil such as chicken fat, lard, beef tallow, milkfat, ghee, fish oil, and whale oil. Among them, fat/oil including sesame oil, canola oil, chicken fat, or milkfat are preferable from the viewpoint of flavor.

The content of fat/oil in the emulsified liquid seasoning of the present invention refers to a total content of the flavor oil and the edible fat/oil other than flavor oils. The content of fat/oil in the emulsified liquid seasoning of the present invention is 0.2% to 10% by mass, preferably 0.5% to 5% by mass, more preferably 0.5% to 3% by mass, and most preferably 0.5% to 2% by mass from the viewpoint of enhancing fermentation feeling. When the content of fat/oil is less than 0.2% by mass, the ingredient does not sufficiently absorb the flavor component, and when the content of fat/oil is more than 10% by mass, the seasoning becomes oily, which is not preferable.

### (Lactic acid)

Examples of the "lactic acid" used in the emulsified liquid seasoning of the present invention include lactic acid, fermentative lactic acid, sodium lactate, potassium lactate, and calcium lactate, but fermentative lactic acid obtained through fermentation is preferable. Fermentative lactic acid can be produced through fermentation with lactic acid bacteria using a carbohydrate such as glucose, lactose, and sucrose as a raw material. Alternatively, commercially available fermentative lactic acid may also be used. In addition, besides the above-described lactic acids, lactic acid-containing food or food-derived lactic acid material can also be used so as to provide the predetermined lactic acid content described below. Examples of the lactic acid-containing food include kimchi, pickles, pickling solution, *miso,* soy sauce, cheese, yogurt, and alcoholic beverages, and materials obtained from the above-described lactic acid-containing food can be used as the food-derived lactic acid material.

The content of lactic acid in the emulsified liquid seasoning of the present invention is 0.2% to 2.0% by mass, preferably 0.3% to 1.5% by mass, and more preferably 0.35% to 1.5% by mass from the viewpoint of enhancing fermentation feeling. When the content of lactic acid in the emulsified liquid seasoning is less than 0.2% by mass, sufficient fermentation feeling is not obtained, and when the content of lactic acid in the emulsified liquid seasoning is more than 2.0% by mass, sour taste is strong, and rich taste and preferable fermentation feeling are not obtained.

### (Spice and spice extract)

The "spice" used in the emulsified liquid seasoning of the present invention refers to one type of seasoning which utilizes a part of a plant body (the fruit, pericarp, flower, bud, bark, stalk, leaf, seed, root, rhizome, etc., of a plant) which has a unique flavor, stimulating taste, and color tone and which is to be mixed into food and beverage for the purpose of aromatization, deodorization, seasoning, coloration, etc. Examples of the spice include herb. The examples of the spice include pepper (black pepper, white pepper, and red pepper), garlic, ginger, sesame (sesame seeds), capsicum, horseradish (*Armoracia rusticana*), mustard, poppy seeds, *yuzu,* nutmeg, cinnamon, paprika, cardamom, cumin, saffron, allspice, clove, Japanese pepper, orange peel, fennel, licorice, fenugreek, Dill seed, Sichuan pepper, long pepper, and olive fruit. In addition, among the spices, the herb means one utilizing stalks, leaves, and flowers, and examples thereof include watercress, coriander, Japanese basil, celery, tarragon, chives, chervil, sage, thyme, laurel, leek, parsley, mustard green *(Brassica juncea),* Japanese ginger, mugwort, basil, oregano, rosemary, peppermint, savory, lemon grass, Dill, Japanese horseradish leaves, and Japanese pepper leaves. These spices may be used alone as a single type, or may also be used in any given combination of two or more types at any given ratio.

The "spice extract" used in the emulsified liquid seasoning of the present invention is not particularly limited, as long as it is an extract from food products, which is generally displayed as "spice," and examples thereof include capsicum extract, garlic extract, mustard extract, ginger extract, pepper extract, Japanese horseradish extract, onion extract, and Japanese pepper extract. These spice extracts may be used alone as a single type, or may also be used in any given combination of two or more types at any given ratio.

### (Fermented product)

The "fermented product" used in the emulsified liquid seasoning of the present invention may be a fermented plant product and may be a fermented milk product. The fermented products listed below may be used alone as a single type, or may also be used in any given combination of two or more types at any given ratio.

The fermented plant product is a product obtained by fermenting and ripening a raw plant material such as cereals (rice, barley, wheat, etc.), beans (soybean, red bean, etc.), and vegetables and fruits (Chinese cabbage, radish, etc.) with a microorganism, and examples thereof include brewed vinegar, *miso,* soy sauce, and pickle.

Examples of the above-described brewed vinegar include grain vinegar (rice vinegar, brown rice vinegar, black vinegar, sake lees vinegar, malt vinegar, adlay vinegar, soybean vinegar, etc.); fruit vinegar (apple vinegar, grape vinegar, lemon vinegar, *kabosu* vinegar, *ume* vinegar, wine vinegar, balsamic vinegar, etc.); alcoholic vinegar produced by acetic acid fermentation using ethanol as a raw material; Chinese vinegar; and Sherry vinegar. Examples of the above-described soy sauce include *koikuchi* (dark-colored) soy sauce, *usukuchi* (light-colored) soy sauce, white soy sauce, *tamari* (rich-tasting) soy sauce, and *saishikomi* (refermented) soy sauce. Examples of the above-described *miso* include barley *miso,* rice miso, bean *miso,* and mixed *miso* as well as *aka miso* (dark brown *miso), shiro miso* (white *miso),* and *tanshoku miso* (light colored *miso),* which are named based on the color difference caused by the production method thereof. Examples of the pickle include kimchi, sauerkraut, capers, pickles, and Chinese bamboo shoots.

The fermented milk product is a product obtained by inoculating a lactic acid bacterium or the like into a raw milk material and fermenting the raw milk material, and examples thereof include cheese, yogurt, and fermented butter.

### (Emulsifier)

Examples of the "emulsifier" used in the emulsified liquid seasoning of the present invention include yolk, processed yolk, yolk lecithin, soybean lecithin, starch hydrolysates, modified starches, proteins derived from milk, sodium caseinate, polyglycerol fatty acid esters, and organic acid esters. The emulsified liquid seasoning of the present invention preferably contains one type or two or more types of emulsifiers selected from the above-described emulsifiers from the viewpoint of emulsification. It is more preferable that the emulsified liquid seasoning of the present invention contains yolk, yolk lecithin, soybean lecithin, or a starch hydrolysate.

### (Common salt content)

The common salt content in the emulsified liquid seasoning of the present invention refers to a total content of common salt used as a raw material and common salt in a common salt-containing food product. The common salt-containing food product is not particularly limited, but examples thereof include above-described soy sauce and *miso.* The common salt content in the emulsified liquid seasoning of the present invention is preferably 0.5% to 20.0% by mass, more preferably 0.8% to 10.0% by mass, and still more preferably 1% to 5% by mass. The above-described common salt content can be measured by the potentiometric titration method or the Mohr method according to the Japanese Agricultural Standards for soy sauce.

### (Other raw materials and the like)

In addition to the above-described raw materials, taste/flavor components such as sugar (including a high-intensity sweetener), an amino acid-based seasoning, a nucleic acid-based seasoning, an organic acid-based seasoning, a flavoring material, an *umami* seasoning, a liquor, and a flavor; additives such as a viscosity adjuster, a stabilizer, a coloring agent, and a calcium salt; and the like may be used in the emulsified liquid seasoning of the present invention to an extent that the effect of the present invention is not impaired. The contents of these components are not particularly limited, and can be appropriately determined depending on intended use.

Examples of the above-described sugar include sucrose, maltose, fructose, isomerized glucose syrup, glucose, starch syrup, dextrin, and sugar alcohols such as sorbitol, maltitol, and xylitol. These sugars may be used alone as a single type, or may also be used in any given combination of two or more types at any given ratio.

Examples of the above-described high-intensity sweetener include aspartame, acesulfame potassium, sucralose, neotame, licorice extract, stevia, and an enzyme-treated product thereof. These high-intensity sweeteners may be used alone as a single type, or may also be used in any given combination of two or more types at any given ratio.

Examples of the above-described amino acid-based seasoning include L-sodium glutamate, DL-alanine, glycine, L- or DL-tryptophan, L-phenylalanine, L- or DL-methionine, L-lysine, L-aspartic acid, sodium L-aspartate, and L-arginine. These amino acid-based seasonings may be used alone as a single type, or may also be used in any given combination of two or more types at any given ratio.

Examples of the above-described nucleic acid-based seasoning include disodium 5'-inosinate, disodium 5'-guanylate, disodium 5'-uridylate, disodium 5'-cytidylate, calcium 5'-ribonucleotide, and disodium 5'-ribonucleotide. These nucleic acid-based seasonings may be used alone as a single type, or may also be used in any given combination of two or more types at any given ratio.

Examples of the above-described organic acid-based seasoning include calcium citrate, trisodium citrate, potassium gluconate, sodium gluconate, succinic acid, monosodium succinate, disodium succinate, sodium acetate, potassium DL-hydrogen tartrate, potassium L-hydrogen tartrate, sodium DL-tartrate, sodium L-tartrate, potassium lactate, calcium lactate, sodium lactate, monosodium fumarate, and sodium DL-malate. These organic acid-based seasonings may be used alone as a single type, or may also be used in any given combination of two or more types at any given ratio. The combined use of two or more types of the organic acid-based seasonings is preferable because the tastes of both seasonings are synergistically enhanced.

Examples of the above-described flavoring material include soup stock from dried and smoked bonito, kelp soup stock, vegetable extract, bonito extract, kelp extract, seafood extract, meat extract, and fruit juice. These flavoring materials may be used alone as a single type, or may also be used in any given combination of two or more types at any given ratio.

Examples of the above-described *umami* seasoning include protein hydrolysate and yeast extract. These *umami* seasonings may be used alone as a single type, or may also be used in any given combination of two or more types at any given ratio.

Examples of the above-described liquor include refined sake, synthetic refined sake, *mirin* (sweet cooking rice wine), *Shochu* (traditional Japanese distilled spirit), wine, liqueur, and Chinese (Shaoxing) rice wine. These liquors may be used alone as a single type, or may also be used in any given combination of two or more types at any given ratio.

Examples of the above-described flavor include ginger flavor, garlic flavor, mustard flavor, onion flavor, sesame flavor, green onion flavor, leek flavor, Japanese basil flavor, Japanese horseradish flavor, and lemon flavor. These flavors may be used alone as a single type, or may also be used in any given combination of two or more types at any given ratio.

Examples of the above-described viscosity adjuster include gum Arabic, alginic acid, sodium alginate, carrageenan, karaya gum, agar, locust bean gum, xanthan gum, guar gum, gellan gum, cellulose, tamarind seed gum, tara gum, tragacanth gum, pullulan, pectin, chitin, chitosan, and modified starch. These viscosity adjusters may be used alone as a single type, or may also be used in any given combination of two or more types at any given ratio.

The pH of the seasoning liquid in the emulsified liquid seasoning of the present invention is preferably 2 to 5, more preferably 2.5 to 4.5, and still more preferably 3 to 4. The pH value within the above-described range is preferable in maintaining food texture and enhancing fermentation feeling.

The emulsified liquid seasoning of the present invention can be used for a seasoning for hot-pots, a seasoning for noodles, a seasoning for rice, a seasoning for *Kamameshi* (Japanese rice pilaf cooked in an iron pot), a seasoning for foods dressed with a thick starchy sauce, a seasoning for grilled meats, a seasoning for daily dishes, a seasoning for *tofu,* a seasoning for Chinese fried rice, a seasoning for *tendon* (a bowl of rice topped with *tempura*), a seasoning for dumplings, a seasoning for *aemono* (sauce-dressed dishes), a seasoning for hamburger steaks, a seasoning for steaks, a seasoning for sauteed food, a seasoning for microwave cooking, a seasoning for Sundubu-jjigae, a seasoning for stir-fry, a seasoning for *Takikomi Gohan* (Japanese rice dishes seasoned and cooked with various ingredients), a seasoning for *Gomoku Gohan* (Japanese rice dishes seasoned and cooked with various ingredients), a seasoning for kimchi, a seasoning for fried food, a seasoning for ramen noodles, a seasoning for stewed dishes, a seasoning for *Shabu Shabu,* a seasoning for dip, a seasoning for pasta, a seasoning for soup, a seasoning for salads, a seasoning for sandwich, and the like. In the emulsified liquid seasoning of the present invention, the fermentation feeling and ripening feeling are enhanced even in the case of stewing vegetables and even if subjected to cooking with heat, and a peculiar fermenting smell and aftertaste, which cause unpleasant feeling, are not felt. Accordingly, the emulsified liquid seasoning of the present invention is useful as a seasoning for cooking with heat which is to be added during cooking with heat or as a seasoning for cooking with heat which is to be poured after cooking with heat. It is particularly preferable that the emulsified liquid seasoning of the present invention is used as a seasoning for grilled meats, a seasoning for daily dishes, a seasoning for pasta, a seasoning for Chinese fried rice, a seasoning for soup, or a seasoning for dumplings.

### 2. Method for producing ingredient-containing emulsified liquid seasoning

A method for producing the ingredient-containing emulsified liquid seasoning of the present invention comprises the following step (a-1) or (a-2) and step (b):
(a-1) a step of adding either a flavor oil or a fat/oil mixture of a flavor oil and an edible fat/oil other than flavor oils to water, followed by emulsification through mixing and stirring to obtain a fat/oil emulsion; or
(a-2) a step of adding an edible fat/oil other than flavor oils and a spice or spice extract to water, followed by emulsification through mixing and stirring to obtain a fat/oil emulsion; and
(b) a step of mixing the fat/oil emulsion obtained in either the step (a-1) or the step (a-2), a seasoning liquid comprising at least lactic acid and a fermented product, and an ingredient, followed by heat treatment at 60°C to 100°C for 5 to 30 minutes.

The mixing and stirring in the step (a-1) or (a-2) may be conducted in the presence of an emulsifier. The types of the flavor oil, the edible fat/oil other than flavor oils, the spice or spice extract, and the emulsifier used in the step (a-1) or (a-2) are as described above. In the step (a-1), the flavor oil may be used alone, but the flavor oil is preferably used in combination with the edible fat/oil other than flavor oils from the viewpoint of adjusting the fat/oil content. When the flavor oil and the edible fat/oil other than flavor oils are used in combination, the ratio therebetween can be appropriately adjusted. In the step (a-2), the edible fat/oil other than flavor oils is used alone as a fat/oil. In this case, the flavor component of the spice or spice extract can transfer to the edible fat/oil by emulsifying the edible fat/oil with the spice or the spice extract. Emulsification can be carried out using an emulsifying apparatus such as a homogenizing mixer and a colloid mill singly or in an appropriate combination according to a usual method used for producing an oil-in-water type emulsified liquid seasoning. It is preferable that heat is applied during mixing and stirring of raw materials for emulsification as needed.

The mixing of the fat/oil emulsion, the seasoning liquid comprising at least lactic acid and a fermented product, and the ingredient in the step (b) can also be carried out according to a usual method, which is not particularly limited, but in general, is a method including homogeneously mixing the fat/oil emulsion and the seasoning liquid with a homogenizing mixer to prepare a mixed liquid, adding the ingredient thereto, and further mixing the resultant mixture, for example. In addition, heating during mixing is preferably carried out at 60°C to 100°C for 5 to 30 minutes.

The ingredient-containing emulsified liquid seasoning obtained through the above-described steps is, directly or after being subjected to sterilization treatment such as heat sterilization or pressurized sterilization, filled into a vessel, as in the case of common liquid seasonings. While the vessel used for the emulsified liquid seasoning of the present invention is not particularly limited in terms of its material or shape, examples thereof include a plastic-made vessel, a pouch (a polyethylene pouch or an aluminum pouch), a PET bottle, a steel can, an aluminum can, and a bottle vessel. In addition, the emulsified liquid seasoning of the present invention may be filled into a vessel, and is then subjected to sterilization treatment such as heat sterilization or retort sterilization to produce a liquid seasoning.

As another aspect of the step (b), the step (b) may be carried out by a method which includes introducing the ingredient into the above-described vessel capable of being hermetically sealed, subsequently adding the seasoning liquid thereto, hermetically sealing the vessel, and subjecting the hermetically sealed vessel to heat treatment without stirring. The above-described heat treatment is carried out by placing the vessel, which has been filled with the ingredient and the seasoning liquid and hermetically sealed, under the presence of hot air, hot water, hot water shower, steam, or the like. The heat treatment can be carried out by temperature increasing heat treatment or constant-temperature heat treatment. The temperature increasing heat treatment refers to a method in which temperature is increased to a predetermined temperature and heating is terminated when the temperature reaches the predetermined temperature. The constant-temperature heat treatment refers to a heat treatment method, in which temperature is increased to a predetermined temperature, and the temperature is maintained constant thereafter. Heating temperature is a temperature in a heating environment, and is preferably 60°C to 100°C, more preferably 65°C to 95°C, and still more preferably 70°C to 95°C. In the case of the temperature increasing heat treatment, the heat treatment time refers to a time necessary for a temperature of 60°C to reach the predetermined temperature, and in the case of the constant-temperature heat treatment, the heat treatment time refers to a total of a time necessary for a temperature of 60°C to reach the predetermined temperature and a duration time of maintaining the constant temperature. The above-described heating time may be appropriately adjusted depending on the temperature, but is preferably 20 to 120 minutes, more preferably 20 to 100 minutes, and still more preferably 30 to 90 minutes. In the case of the constant-temperature heat treatment, the duration time of maintaining the predetermined temperature is preferably 5 to 110 minutes, more preferably 5 to 90 minutes, and still more preferably 10 to 80 minutes, within the above-described heating time.

### Examples

Hereinafter, the present invention will be more specifically described with examples.

### (Test Example 1) Studies regarding lactic acid content and pH

### (1) Preparation of test products (Examples 1 to 4 and Comparative Examples 1 to 3)

### (1-1) Preparation of flavor oil

A flavor oil was obtained by heating 45 g of processed garlic, 30 g of red pepper (Capsicum annuum), and 25 g of sesame oil to 105°C while stirring and mixing them, and subsequently cooling the resultant mixture to room temperature (in the seasoning liquid, flavor oil content: 4.2% by mass, fat/oil (sesame oil) content: 1.0% by mass, spice (processed garlic and red pepper (Capsicum annuum)) content: 3.2% by mass).

### (1-2) Preparation of fat/oil emulsion

The flavor oil obtained in (1-1) and an emulsifier (soybean lecithin; lysolecithin paste) were mixed with water (a part of the total formulation) in the mixing ratios (% by mass) shown in Table 1, and each of the resultant mixtures was mixed and stirred at 25°C for 10 minutes to obtain a fat/oil emulsion.

### (1-3) Preparation of ingredient-containing emulsified liquid seasoning

Each of the fat/oil emulsion obtained in (1-2), common salt, glucose syrup, *usukuchi* soy sauce (common salt content: 18%), rice *miso* (common salt content: 17%), brewed vinegar (acidity: 15%), and fermentative lactic acid were dissolved in water in the corresponding mixing ratio (% by mass) shown in Table 1, the resultant mixture was heat-mixed at 25°C to prepare a seasoning liquid. Dried onions were filled into a wide-mouthed cup so that the content of the onions after swelling in the seasoning liquid based on the total amount of the liquid seasoning was 40% by mass. The seasoning liquid was then added thereto and the cup was sealed with an aluminum sheet. Heating was started with steam by a high temperature heat treatment machine, and heat treatment was performed at 95°C for 5 minutes. Thereafter, the cup was cooled in cold water to room temperature, thereby obtaining an ingredient-containing emulsified liquid seasoning as a test product.

### (2) Measurement of content of lactic acid

The seasoning liquid of each of the test products was 10-fold diluted with water and filtered through a 0.45-µm filter to prepare a sample, and an HPLC analysis under the following conditions was conducted on the sample.

### <Analysis conditions>

Column for analysis: cation-based column Shodex RSpak KC-G
Mobile phase: 4 mM p-toluenesulfonic acid
Column temperature: 50°C
Reaction solution: 4 mM p-toluenesulfonic acid + 100 µM EDTA + 20 mM Bis-tris aqueous solution
Flow rate: 0.9 ml/min
Detector: electric conductivity detector analysis
Analysis time: 30 minutes
Amount injected: 50 µL

### (3) Sensory evaluation test

With respect to the emulsified liquid seasoning of each of the test products prepared in (1), sensory evaluation in terms of "strength of fermentation feeling," "favorability of fermentation feeling," "rich taste," "deliciousness of onions," and "flavor of spice" was conducted on the ingredient obtained when the emulsified liquid seasoning was used for cooking meat according to the following method. The method of cooking meat was as follows. A frying pan was preheated and salad oil was poured thereinto to form a thin oil layer. Then, about 240 g of thinly sliced pork was heated in the frying pan over medium heat until the meat became browned. Next, 240 g of the seasoning of each of the test products in a wide-mouth cup was added and sufficiently mixed with the meat while heating over medium heat for 5 minutes.

The sensory evaluation was carried out with five inspectors trained for the sensory test, in accordance with the following evaluation criteria. In calculating the score in each evaluation item, a weighted average was calculated from the evaluation scores obtained by the five inspectors, and the obtained value was rounded off to two decimal places. A comprehensive evaluation was obtained by calculating a weighted average from the evaluation scores of respective evaluation items. The intermediate point of the 5-point evaluation, three points, was defined as a passing score (effective), and the scores higher than three points, three and half points or higher, were evaluated to have good effects, and the scores equal to or higher than four points were evaluated to have better effects.

### <Strength of fermentation feeling>

5: Fermentation feeling is sufficiently felt
4: Fermentation feeling is felt well
3: Fermentation feeling is felt
2: Fermentation feeling is poorly felt
1: No fermentation feeling is felt

### <Favorability of fermentation feeling>

5: Fermentation feeling is very good
4: Fermentation feeling is good
3: Fermentation feeling is somewhat good
2: Fermentation feeling is not so good (somewhat uncomfortable)
1: Fermentation feeling is poor (uncomfortable)

### <Rich taste>

5: Rich taste is sufficiently felt
4: Rich taste is felt well
3: Rich taste is felt
2: Rich taste is poorly felt
1: No rich taste is felt

### <Deliciousness of onions>

5: Taste of onions is sufficiently felt
4: Taste of onions is felt well
3: Taste of onions is felt
2: Taste of onions is poorly felt
1: No taste of onions is felt

### <Flavor of spice>

5: Flavor of spice is sufficiently felt
4: Flavor of spice is felt well
3: Flavor of spice is felt
2: Flavor of spice is poorly felt
1: No flavor of spice is felt

### (4) Test results

The lactic acid content (% by mass) and the results of the sensory evaluation of each test product are shown in Table 1. In addition, the fat/oil content (% by mass) of each test product is also shown in Table 1.

**[Table 1]**

| | | Examples | | | | Comparative Examples | | |
|---|---|---|---|---|---|---|---|---|
| | | 1 | 2 | 3 | 4 | 1 | 2 | 3 |
| <Raw materials> (% by mass) | | | | | | | | |
| A. Flavor oil and emulsifier (fat and oil emulsion) | | | | | | | | |
| Water | | 7.0 | 7.0 | 7.0 | 7.0 | 7.0 | 7.0 | 7.0 |
| Soybean lecithin (Ivsolecithin paste) | | 0.2 | 0.2 | 0.2 | 0.2 | 0.2 | 0.2 | 0.2 |
| Flavor oil (total amount) | | 4.2 | 4.2 | 4.2 | 4.2 | 4.2 | 4.2 | 4.2 |
| | (Fat and oil component) | 1.0 | 1.0 | 1.0 | 1.0 | 1.0 | 1.0 | 1.0 |
| | (Spice component) | 3.2 | 3.2 | 3.2 | 3.2 | 3.2 | 3.2 | 3.2 |

| B. Other raw materials | | | | | | | | |
|---|---|---|---|---|---|---|---|---|
| Common salt | | 0.3 | 0.3 | 0.3 | 0.3 | 0.3 | 0.3 | 0.3 |
| Glucose syrup | | 9.3 | 9.3 | 9.3 | 9.3 | 9.3 | 9.3 | 9.3 |
| *Usukuchi* soy sauce | | 10.0 | 10.0 | 10.0 | 10.0 | 10.0 | 10.0 | 10.0 |
| Rice *miso* | | 4.3 | 4.3 | 4.3 | 4.3 | 4.3 | 4.3 | 4.3 |
| Brewed vinegar | | 3.0 | 3.0 | 3.0 | 3.0 | 3.0 | 3.0 | 3.0 |
| Fermentative lactic acid | | 0.5 | 0.3 | 1.0 | 2.0 | 0.0 | 0.05 | 5.0 |
| Dried onions | | 11.0 | 11.0 | 11.0 | 11.0 | 11.0 | 11.0 | 11.0 |
| Water | | Appropriate amount | Appropriate amount | Appropriate amount | Appropriate amount | Appropriate amount | Appropriate amount | Appropriate amount |
| Total | | 100 | 100 | 100 | 100 | 100 | 100 | 100 |
| Lactic acid content (% by mass) | | 0.35 | 0.25 | 0.6 | 1.1 | 0.1 | 0.12 | 2.6 |
| Fat and oil content (% by mass) | | 1.0 | 1.0 | 1.0 | 1.0 | 1.0 | 1.0 | 1.0 |

| <Sensory evaluation of liquid seasoning> | | | | | | | | |
|---|---|---|---|---|---|---|---|---|
| Strength of fermentation feeling | | 4.6 | 4.0 | 4.6 | 4.4 | 2.0 | 2.6 | 4.2 |
| Favorability of fermentation feeling | | 4.6 | 4.2 | 4.6 | 3.8 | 1.8 | 2.6 | 1.6 |
| Rich taste | | 4.4 | 3.6 | 4.0 | 3.2 | 2.2 | 2.4 | 1.4 |
| Deliciousness of onions | | 4.0 | 4.0 | 3.5 | 3.5 | 2.8 | 3.0 | 1.5 |
| Flavor of spice | | 3.4 | 3.4 | 3.4 | 3.0 | 2.6 | 2.6 | 1.6 |
| Comprehensive evaluation | | 4.2 | 3.8 | 4.0 | 3.6 | 2.3 | 2.6 | 2.1 |

| <Sensory evaluation of ingredient after cooking> | | | | | | | | |
|---|---|---|---|---|---|---|---|---|
| Strength of fermentation feeling | | 4.4 | 3.0 | 4.6 | 4.4 | 1.6 | 2.4 | 4.8 |
| Favorability of fermentation feeling | | 4.4 | 3.2 | 4.4 | 4.0 | 1.8 | 2.4 | 1.8 |
| Rich taste | | 4.2 | 3.2 | 4.0 | 3.8 | 2.2 | 2.4 | 1.8 |
| Deliciousness of onions | | 4.2 | 3.8 | 4.0 | 3.4 | 3.2 | 3.2 | 1.8 |
| Flavor of spice | | 3.6 | 3.2 | 3.6 | 3.0 | 3.0 | 3.0 | 2.0 |
| Comprehensive evaluation | | 4.2 | 3.3 | 4.1 | 3.7 | 2.4 | 2.7 | 2.4 |

As shown in Table 1, among ingredient-containing emulsified liquid seasonings each containing an ingredient, a flavor oil, lactic acid, a spice, and a fermented product, in the cases of the liquid seasonings of Examples 1 to 4, each of which had a lactic acid content within a range of 0.2% to 2.0% by mass, good fermentation feeling was sufficiently felt, and rich taste, deliciousness of onions, and the flavor of the spices were sufficiently felt in both of the liquid seasonings themselves and the ingredient of the dish cooked using the liquid seasonings. On the other hand, fermentation feeling was insufficient and unfavorable, and rich taste, deliciousness of onions, and the flavor of the spices were not sufficiently felt in the liquid seasonings of Comparative Examples 1 to 3, each of which had a lactic acid content out of the range of 0.2% to 2.0% by mass.

### (Test Example 2) Studies regarding fat/oil content

### (1) Preparation of test products (Examples 5 to 10 and Comparative Examples 4 and 5)

### (1-1) Preparation of flavor oil

A flavor oil was prepared in the same manner as in Test Example 1.

### (1-2) Preparation of fat/oil emulsion

The flavor oil obtained in (1-1), canola oil, and an emulsifier (soybean lecithin) were mixed with water (a part of the total formulation) in the mixing ratios (% by mass) shown in Table 2, and fat/oil emulsions of Examples 5 to 10 and Comparative Example 5 were obtained in the same manner as in Test Example 1.

### (1-3) Preparation of ingredient-containing emulsified liquid seasoning

Each of the fat/oil emulsions obtained in (1-2) (Comparative Example 4 used no fat/oil and only used a spice), common salt, glucose syrup, *usukuchi* soy sauce (common salt content: 18%), rice *miso* (common salt content: 17%), brewed vinegar (acidity: 15%), and fermentative lactic acid were dissolved in water in the corresponding mixing ratio (% by mass) shown in Table 2 to prepare a seasoning liquid. Dried onions were filled into a wide-mouthed cup so that the content of the onions after swelling in the seasoning liquid based on the total amount of the liquid seasoning was 40% by mass. The seasoning liquid was then added thereto and the cup was sealed with an aluminum sheet. Heating was started with steam by a high temperature heat treatment machine, and heat treatment was performed at 95°C for 5 minutes. Thereafter, the cup was cooled in cold water to room temperature, thereby obtaining an ingredient-containing emulsified liquid seasoning as a test product.

### (2) Analysis test

The lactic acid contents of the test products prepared in (1) were analyzed in the same manner as in Test Example 1.

### (3) Sensory evaluation test

Sensory evaluation was conducted on the test products prepared in (1) in the same manner as in Test Example 1.

### (4) Test results

The lactic acid content (% by mass) and the results of the sensory evaluation of each test product are shown in Table 2. In addition, the fat/oil content (% by mass) of each test product is also shown in Table 2.

**[Table 2]**

| | | Examples | | | | | | Comparative Examples | |
|---|---|---|---|---|---|---|---|---|---|
| | | 5 | 6 | 7 | 8 | 9 | 10 | 4 | 5 |
| <Raw materials> (% by mass) | | | | | | | | | |
| A-1. Flavor oil and emulsifier (fat and oil emulsion) | | | | | | | | | |
| Water | | 7.0 | 7.0 | 7.0 | 7.0 | 7.0 | 7.0 | - | 30.0 |
| Soybean lecithin (lysolecithin paste) | | 0.1 | 0.1 | 0.1 | 0.1 | 0.1 | 0.1 | - | 1.0 |
| Flavor oil (total amount) | | 1.0 | 2.1 | 4.2 | 8.4 | 2.1 | - | - | 4.2 |
| | (Fat and oil component) | 0.25 | 0.5 | 1.0 | 2.0 | 0.5 | - | - | 1.0 |
| | (Spice component) | 0.75 | 1.6 | 3.2 | 6.4 | 1.6 | - | - | 3.2 |

| A-2. Edible fat and oil other than flavor oils and spice | | | | | | | | | |
|---|---|---|---|---|---|---|---|---|---|
| Canola oil | | - | - | - | - | 3.0 | 1.0 | - | 19.0 |
| Processed garlic | | - | - | - | - | - | 2.0 | 2.0 | - |
| Red pepper (Capsicum annuum) | | - | - | - | - | - | 1.2 | 1.2 | - |

| B. Other raw materials | | | | | | | | | |
|---|---|---|---|---|---|---|---|---|---|
| Common salt | | 0.3 | 0.3 | 0.3 | 0.3 | 0.3 | 0.3 | 0.3 | 0.3 |
| Glucose syrup | | 9.3 | 9.3 | 9.3 | 9.3 | 9.3 | 9.3 | 9.3 | 9.3 |
| *Usukuchi* soy sauce | | 10.0 | 10.0 | 10.0 | 10.0 | 10.0 | 10.0 | 10.0 | 10.0 |
| Rice *miso* | | 4.3 | 4.3 | 4.3 | 4.3 | 4.3 | 4.3 | 4.3 | 4.3 |
| Brewed vinegar | | 3.0 | 3.0 | 3.0 | 3.0 | 3.0 | 3.0 | 3.0 | 3.0 |
| Fermentative lactic acid | | 0.5 | 0.5 | 0.5 | 0.5 | 0.5 | 0.5 | 0.5 | 0.5 |
| Dried onions | | 11.0 | 11.0 | 11.0 | 11.0 | 11.0 | 11.0 | 11.0 | 11.0 |
| Water | | Appropriate amount | Appropriate amount | Appro- priate amount | Appropriate amount | Appropriate amount | Appropriate amount | Appropriate amount | Appropriate amount |
| Total | | 100 | 100 | 100 | 100 | 100 | 100 | 100 | 100 |
| Lactic acid content (% by mass) | | 0.35 | 0.35 | 0.35 | 0.35 | 0.35 | 0.35 | 0.35 | 0.35 |
| Fat and oil content (% by mass) | | 0.25 | 0.5 | 1.0 | 2.0 | 3.5 | 1.0 | 0 | 20.0 |

| <Sensory evaluation of liquid seasoning> | | | | | | | | | |
|---|---|---|---|---|---|---|---|---|---|
| Strength of fermentation feeling | | 4.0 | 4.4 | 4.4 | 4.6 | 4.0 | 2.8 | 2.2 | 3.0 |
| Favorability of fermentation feeling | | 4.0 | 4.4 | 4.4 | 4.0 | 4.3 | 2.8 | 2.0 | 2.8 |
| Rich taste | | 3.8 | 4.0 | 4.2 | 4.4 | 4.0 | 3.0 | 2.0 | 3.3 |
| Deliciousness of onions | | 3.4 | 4.4 | 3.8 | 3.6 | 3.75 | 3.2 | 3.0 | 2.3 |
| Flavor of spice | | 3.4 | 4.0 | 4.0 | 3.8 | 4.0 | 3.4 | 3.2 | 2.5 |
| Comprehensive evaluation | | 3.7 | 4.2 | 4.2 | 4.1 | 4.0 | 3.0 | 2.5 | 2.8 |

| <Sensory evaluation of ingredient after cooking> | | | | | | | | | |
|---|---|---|---|---|---|---|---|---|---|
| Strength of fermentation feeling | | 4.0 | 4.6 | 4.6 | 4.6 | 3.0 | 3.2 | 2.0 | 2.0 |
| Favorability of fermentation feeling | | 4.2 | 4.6 | 4.2 | 3.6 | 3.3 | 3.2 | 2.4 | 2.0 |
| Rich taste | | 3.8 | 4.4 | 4.6 | 4.2 | 4.0 | 3.2 | 2.2 | 3.5 |
| Deliciousness of onions | | 4.2 | 4.4 | 4.0 | 3.6 | 3.8 | 4.0 | 3.6 | 2.0 |
| Flavor of spice | | 3.6 | 4.0 | 4.0 | 3.8 | 4.0 | 3.8 | 3.0 | 2.3 |
| Comprehensive evaluation | | 4.0 | 4.4 | 4.3 | 4.0 | 3.5 | 3.5 | 2.6 | 2.4 |

As shown in Table 2, among ingredient-containing emulsified liquid seasonings each containing an ingredient, a flavor oil or a fat/oil mixture of a flavor oil and an edible fat/oil other than flavor oils, lactic acid, a spice, and a fermented product, in the cases of the emulsified liquid seasonings of Examples 5 to 10, each of which had a fat/oil content within a range of 0.2% to 10% by mass, as comprehensive evaluation results, good fermentation feeling was sufficiently felt, and rich taste, deliciousness of onions, and the flavor of the spices were sufficiently felt in both of the liquid seasonings themselves and the ingredient of the dish cooked using the liquid seasonings. On the other hand, fermentation feeling was insufficient and unfavorable, and rich taste, deliciousness of onions, and the flavor of the spices were not sufficiently felt in the emulsified liquid seasonings of Comparative Examples 4 and 5, each of which had a fat/oil content out of the range of 0.2% to 10% by mass.

### (Test Example 3) Studies regarding type of emulsifier and presence or absence of emulsification

### (1) Preparation of test products (Examples 11 to 15)

### (1-1) Preparation of flavor oil

A flavor oil was prepared in the same manner as in Test Example 1.

### (1-2) Preparation of fat/oil emulsion

The flavor oil obtained in (1-1) and emulsifiers (soybean lecithin, yolk lecithin) were mixed with water (a part of the total formulation) in the mixing ratios (% by mass) shown in Table 3, and fat/oil emulsions of Examples 11 to 14 were obtained in the same manner as in Test Example 1. In addition, the flavor oil was mixed with water (a part of the total formulation) in the mixing ratio (% by mass) shown in Table 3 followed by mixing and stirring at 10,000 rpm and 25°C for one minute using TK homogenizing mixer (manufactured by Toki Sangyo Co., Ltd (currently PRIMIX Corporation)) to obtain a fat/oil emulsion of Example 15.

### (1-3) Preparation of ingredient-containing emulsified liquid seasoning

Each of the fat/oil emulsions obtained in (1-2), common salt, glucose syrup, *usukuchi* soy sauce (common salt content: 18%), rice *miso* (common salt content: 17%), brewed vinegar (acidity: 15%), and fermentative lactic acid were mixed with water in the corresponding mixing ratio (% by mass) shown in Table 3 to prepare a seasoning liquid. Dried onions were filled into a wide-mouthed cup so that the content of the onions after swelling in the seasoning liquid based on the total amount of the liquid seasoning was 40% by mass. The seasoning liquid was then added thereto and the cup was sealed with an aluminum sheet. Heating was started with steam by a high temperature heat treatment machine, and heat treatment was performed at 95°C for 5 minutes. Thereafter, the cup was cooled in cold water to room temperature, thereby obtaining an ingredient-containing emulsified liquid seasoning as a test product.

### (2) Analysis test

The lactic acid contents of the test products prepared in (1) were analyzed in the same manner as in Test Example 1.

### (3) Sensory evaluation test

Sensory evaluation was conducted on the test products prepared in (1) in the same manner as in Test Example 1.

### (4) Test results

The lactic acid content (% by mass) and the results of the sensory evaluation of each test product are shown in Table 3. In addition, the fat/oil content (% by mass) of each test product is also shown in Table 3.

**[Table 3]**

| | | Examples | | | | |
|---|---|---|---|---|---|---|
| | | 11 | 12 | 13 | 14 | 15 |
| Raw materials (% by mass) | | | | | | |
| A. Flavor oil and emulsifier (fat and oil emulsion) | | | | | | |
| Water | | 7.0 | 7.0 | 7.0 | 7.0 | 7.0 |
| Soybean lecithin | | 0.05 | 0.1 | - | 1.0 | - |
| Yolk lecithin | | - | - | 0.1 | - | - |
| Flavor oil (total amount) | | 4.2 | 4.2 | 4.2 | 4.2 | 4.2 |
| | (Fat and oil component) | 1.0 | 1.0 | 1.0 | 1.0 | 1.0 |
| | (Spice component) | 3.2 | 3.2 | 3.2 | 3.2 | 3.2 |

| B. Other raw materials | | | | | | |
|---|---|---|---|---|---|---|
| Common salt | | 0.3 | 0.3 | 0.3 | 0.3 | 0.3 |
| Glucose syrup | | 9.3 | 9.3 | 9.3 | 9.3 | 9.3 |
| *Usukuchi* soy sauce | | 10.0 | 10.0 | 10.0 | 10.0 | 10.0 |
| Rice *miso* | | 4.3 | 4.3 | 4.3 | 4.3 | 4.3 |
| Brewed vinegar | | 3.0 | 3.0 | 3.0 | 3.0 | 3.0 |
| Fermentative lactic acid | | 0.5 | 0.5 | 0.5 | 0.5 | 0.5 |
| Dried onions | | 11.0 | 11.0 | 11.0 | 11.0 | 11.0 |
| Water | | Appropriate amount | Appropriate amount | Appropriate amount | Appropriate amount | Appropriate amount |
| Total | | 100 | 100 | 100 | 100 | 100 |
| Lactic acid content (% by mass) | | 0.35 | 0.35 | 0.35 | 0.35 | 0.35 |
| Fat and oil content (% by mass) | | 1.0 | 1.0 | 1.0 | 1.0 | 1.0 |

| <Results of Sensory evaluation of liquid seasoning> | | | | | | |
|---|---|---|---|---|---|---|
| Strength of fermentation feeling | | 3.0 | 4.3 | 4.3 | 3.8 | 4.0 |
| Favorability of fermentation feeling | | 3.0 | 4.0 | 4.3 | 3.3 | 4.0 |
| Rich taste | | 3.0 | 4.3 | 4.3 | 3.3 | 3.3 |
| Deliciousness of onions | | 2.8 | 4.0 | 3.8 | 2.5 | 2.8 |
| Flavor of spice | | 3.3 | 4.0 | 3.8 | 2.3 | 2.8 |
| Comprehensive evaluation | | 3.0 | 4.1 | 4.1 | 3.0 | 3.4 |

| <Results of sensory evaluation of ingredient after cooking> | | | | | | |
|---|---|---|---|---|---|---|
| Strength of fermentation feeling | | 3.8 | 4.3 | 4.3 | 4.0 | 3.5 |
| Favorability of fermentation feeling | | 3.5 | 4.0 | 4.0 | 3.5 | 3.8 |
| Rich taste | | 4.3 | 4.3 | 4.3 | 4.0 | 3.0 |
| Deliciousness of onions | | 3.8 | 4.0 | 4.0 | 3.3 | 4.0 |
| Flavor of spice | | 3.8 | 4.0 | 4.0 | 3.0 | 3.5 |
| Comprehensive evaluation | | 3.8 | 4.1 | 4.1 | 3.6 | 3.6 |

As shown in Table 3, among ingredient-containing emulsified liquid seasonings each containing an ingredient, a flavor oil, lactic acid, a spice, and a fermented product, in the cases of the emulsified liquid seasonings of Examples 11 to 14, each of which had a fat/oil content and a lactic acid content within predetermined ranges, as comprehensive evaluation results, good fermentation feeling was sufficiently felt, and rich taste, deliciousness of onions, and the flavor of the spices were sufficiently felt in both of the liquid seasonings themselves and the ingredient of the dish cooked using the liquid seasonings regardless of the types of the emulsifier and the presence or absence of the emulsifier. In addition, also in the case of the liquid seasoning of Example 15, in which the liquid seasoning had been mechanically emulsified without using any emulsifier, as comprehensive evaluation results, good fermentation feeling was sufficiently felt, and rich taste, deliciousness of onions, and the flavor of the spices were sufficiently felt in both of the liquid seasoning itself and the ingredient of the dish cooked using the liquid seasoning.

### Industrial Applicability

The present invention is an ingredient-containing emulsified liquid seasoning containing an ingredient in which fermentation feeling and *umami* taste are enhanced, which can be utilized in a production field of emulsified liquid seasonings capable of being easily used in cooking with heat, etc.

All publications, patents, and patent applications cited in the present description are incorporated herein by reference in their entirety.

## Claims

1. An ingredient-containing emulsified liquid seasoning, comprising: (A) a dried ingredient selected from a dried vegetable, or a dried product of a fruit, seed, nut, mushroom, bean, seafood, meat, processed meat product, seaweed or egg; (B) at least one fat/oil selected from a flavor oil and an edible fat/oil other than flavor oils; (C) lactic acid; (D) a spice or spice extract; and (E) a fermented product, wherein the content of lactic acid in the ingredient-containing emulsified liquid seasoning is 0.2% to 2.0% by mass, and the content of the fat/oil in the ingredient-containing emulsified liquid seasoning is 0.2% to 10% by mass.

2. The ingredient-containing emulsified liquid seasoning according to claim 1, further comprising an emulsifier.

3. The ingredient-containing emulsified liquid seasoning according to claim 1 or 2, wherein the spice is at least one selected from capsicum, ginger, garlic, mustard, and paprika.

4. The ingredient-containing emulsified liquid seasoning according to any one of claims 1 to 3, wherein the fermented product is a fermented plant product or a fermented milk product.

5. The ingredient-containing emulsified liquid seasoning according to any one of claims 2 to 4, wherein the emulsifier is at least one selected from yolk, yolk lecithin, soybean lecithin, and a starch hydrolysate.

6. The ingredient-containing emulsified liquid seasoning according to any one of claims 1 to 5, wherein the ingredient-containing emulsified liquid seasoning is used for cooking with heat.

7. A method for producing the ingredient-containing emulsified liquid seasoning according to any one of claims 1 to 6, the method comprising following step (a-1) or (a-2) and step (b):
(a-1) a step of adding either a flavor oil or a fat/oil mixture of a flavor oil and an edible fat/oil other than flavor oils to water, followed by emulsification through mixing and stirring to obtain a fat/oil emulsion; or
(a-2) a step of adding an edible fat/oil other than flavor oils and a spice or spice extract to water, followed by emulsification through mixing and stirring to obtain a fat/oil emulsion; and
(b) a step of mixing the fat/oil emulsion obtained in either the step (a-1) or the step (a-2), a seasoning liquid comprising at least lactic acid and a fermented product, and an ingredient, followed by heat treatment at 60°C to 100°C for 5 to 30 minutes.

8. The method according to claim 7, wherein the mixing and stirring are conducted in the presence of an emulsifier.

9. A method for cooking a food product for cooking with heat, comprising using the ingredient-containing emulsified liquid seasoning according to any one of claims 1 to 6.

## Patentansprüche

1. Inhaltsstoff-enthaltendes emulgiertes flüssiges Würzmittel, umfassend: (A) einen getrockneten Inhaltsstoff, ausgewählt aus einem getrockneten Gemüse oder einem getrockneten Produkt einer Frucht, einer Saat, einer Nuss, eines Pilzes, einer Bohne, von Meeresfrüchten, von Fleisch, einem verarbeiteten Fleischprodukt, von Algen oder Eiern; (B) zumindest ein Fett/Öl, ausgewählt aus einem Geschmacksöl und einem essbaren Fett/Öl, das kein Geschmacksöl ist; (C) Milchsäure; (D) ein Gewürz oder einen Gewürzextrakt; und (E) ein fermentiertes Produkt, wobei der Gehalt von Milchsäure in dem Inhaltsstoff-enthaltenden emulgierten flüssigen Würzmittel 0,2 bis 2,0 Massen-% beträgt und der Gehalt des Fetts/Öls in dem Inhaltsstoff-enthaltenden emulgierten flüssigen Würzmittel 0,2 bis 10 Massen-% beträgt.

2. Inhaltsstoff-enthaltendes emulgiertes flüssiges Würzmittel nach Anspruch 1, das weiters einen Emulgator umfasst.

3. Inhaltsstoff-enthaltendes emulgiertes flüssiges Würzmittel nach Anspruch 1 oder 2, wobei das Gewürz zumindest eines ist, das aus Paprikaschote, Ingwer, Knoblauch, Senf und Paprika ausgewählt ist.

4. Inhaltsstoff-enthaltendes emulgiertes flüssiges Würzmittel nach einem der Ansprüche 1 bis 3, wobei das fermentierte Produkt ein fermentiertes Pflanzenprodukt oder ein fermentiertes Milchprodukt ist.

5. Inhaltsstoff-enthaltendes emulgiertes flüssiges Würzmittel nach einem der Ansprüche 2 bis 4, wobei der Emulgator zumindest einer ist, der aus Eigelb, Eigelblecithin, Sojabohnenlecithin und einem Stärkehydrolysat ausgewählt ist.

6. Inhaltsstoff-enthaltendes emulgiertes flüssiges Würzmittel nach einem der Ansprüche 1 bis 5, wobei das Inhaltsstoff-enthaltende emulgierte flüssige Würzmittel zum Kochen mit Hitze verwendet wird.

7. Verfahren zur Herstellung eines Inhaltsstoff-enthaltenden emulgierten flüssigen Würzmittels nach einem der Ansprüche 1 bis 6, wobei das Verfahren den folgenden Schritt (a-1) oder (a-2) und Schritt (b) umfasst:
(a-1) einen Schritt des Zusetzens entweder von einem Geschmacksöl oder einem Fett/Ölgemisch eines Geschmacksöls und eines essbaren Fetts/Öls, das kein Geschmacksöl ist, zu Wasser, gefolgt vom Emulgieren durch Mischen und Rühren, um eine Fett/Öl-Emulsion zu erhalten; oder
(a-2) einen Schritt des Zusetzens eines essbaren Fetts/Öls, das kein Geschmacksöl ist, und eines Gewürzes oder eines Gewürzextrakts zu Wasser, gefolgt vom Emulgieren durch Vermischen und Rühren, um eine Fett/Öl-Emulsion zu erhalten; und
(b) einen Schritt des Vermischens der entweder in Schritt (a-1) oder Schritt (a-2) erhaltenen Fett/Öl-Emulsion, einer Würzmittelflüssigkeit, umfassend zumindest Milchsäure und ein fermentiertes Produkt, und eines Inhaltsstoffs, gefolgt von einer Wärmebehandlung bei 60 °C bis 100 °C für 5 bis 30 min.

8. Verfahren nach Anspruch 7, wobei das Vermischen und Rühren in Gegenwart eines Emulgators durchgeführt werden.

9. Verfahren zum Kochen eines Nahrungsmittelprodukts zum Kochen mit Hitze, umfassend die Verwendung eines Inhaltsstoff-enthaltenden emulgierten flüssigen Würzmittels nach einem der Ansprüche 1 bis 6.

## Revendications

1. Assaisonnement liquide émulsionné contenant un ingrédient, comprenant : (A) un ingrédient séché choisi parmi un légume séché, ou un produit séché d'un fruit, une graine, une noix, un champignon, un haricot, un produit de la mer, une viande, un produit de viande transformée, une algue ou un œuf ; (B) au moins une matière grasse/huile choisie parmi une huile aromatique et une matière grasse/huile comestible autre des huiles aromatiques ; (C) de l'acide lactique ; (D) une épice ou un extrait d'épice ; et (E) un produit fermenté, dans lequel la teneur en acide lactique dans l'assaisonnement liquide émulsionné contenant l'ingrédient est de 0,2 % à 2,0 % en masse, et la teneur en matière grasse/huile dans l'assaisonnement liquide émulsionné contenant l'ingrédient est de 0,2 % à 10 % en masse.

2. Assaisonnement liquide émulsionné contenant un ingrédient selon la revendication 1, comprenant en outre un émulsionnant.

3. Assaisonnement liquide émulsionné contenant un ingrédient selon la revendication 1 ou 2, dans lequel l'épice est au moins une épice choisie parmi le piment, le gingembre, l'ail, la moutarde et le paprika.

4. Assaisonnement liquide émulsionné contenant un ingrédient selon l'une quelconque des revendications 1 à 3, dans lequel le produit fermenté est un produit végétal fermenté ou un produit laitier fermenté.

5. Assaisonnement liquide émulsionné contenant un ingrédient selon l'une quelconque des revendications 2 à 4, dans lequel l'émulsionnant est au moins un choisi parmi le jaune d'œuf, la lécithine de jaune d'œuf, la lécithine de soja et un hydrolysat d'amidon.

6. Assaisonnement liquide émulsionné contenant un ingrédient selon l'une quelconque des revendications 1 à 5, dans lequel l'assaisonnement liquide émulsionné contenant un ingrédient est utilisé pour une cuisson à la chaleur.

7. Procédé de production de l'assaisonnement liquide émulsionné contenant un ingrédient selon l'une quelconque des revendications 1 à 6, le procédé comprenant les étapes suivantes (a-1) ou (a-2) et l'étape (b) :
(a-1) une étape consistant à ajouter à de l'eau une huile aromatique ou un mélange de matière grasse/huile d'une huile aromatique et d'une matière grasse/huile comestible autre que des huiles aromatiques, suivie d'une émulsion par mélange et agitation pour obtenir une émulsion de matière grasse/huile ; ou
(a-2) une étape consistant à ajouter à l'eau une matière grasse/huile comestible autre que des huiles aromatiques et une épice ou un extrait d'épice, suivie d'une émulsion par mélange et agitation pour obtenir une émulsion de matière grasse/huile ; et
(b) une étape de mélange de l'émulsion de matière grasse/huile obtenue soit dans l'étape (a-1) soit dans l'étape (a-2), d'un liquide d'assaisonnement comprenant au moins de l'acide lactique et un produit fermenté, et d'un ingrédient, suivie d'un traitement thermique entre 60°C et 100°C pendant 5 à 30 minutes.

8. Procédé selon la revendication 7, dans lequel le mélange et l'agitation sont effectués en présence d'un émulsionnant.

9. Procédé de cuisson d'un produit alimentaire à cuire à la chaleur, comprenant l'utilisation de l'assaisonnement liquide émulsionné contenant un ingrédient selon l'une quelconque des revendications 1 à 6.
